# EUROPEAN PATENT APPLICATION

(11) **EP 2 381 704 A1**
(43) Date of publication of application: **26.10.2011**
(21) Application number: 09833313.1
(22) Date of filing: 20.11.2009
(51) Int. Cl.: H04S 5/02, H04N 5/60, H04N 5/64, H04R 1/02, H04R 3/14, H04R 5/02

(54) **AUDIO OUTPUTTING APPARATUS, VIDEO/AUDIO REPRODUCING APPARATUS AND AUDIO OUTPUTTING METHOD**

(30) Priority: 16.12.2008 JP 2008320219
(71) Applicant: Sony Corporation, Tokyo 108-0075 (JP)
(72) Inventor: YANA, Terutaka, Tokyo 108-0075 (JP); MIKI, Yutaka, Tokyo 108-0075 (JP); SUZUKI, Nobukazu, Tokyo 108-0075 (JP); OHASHI, Yoshio, Tokyo 108-0075 (JP)
(74) Representative: Körber, Martin Hans
(86) International application number: PCT/JP2009/069709
(87) International publication number: WO 2010/071008

(57) **Abstract**

An audio output device includes a division unit 121 for dividing an input audio signal into a first audio signal and a second audio signal, a delay processing unit 122 for outputting the first audio signal after delaying the first audio signal from the second audio signal by a predetermined amount, a frequency adjustment unit 125 for adjusting a frequency band of the second audio signal to be a high frequency band of the first audio signal or a frequency band higher than the first audio signal, first output units 151 and 152 provided above or below a screen of a display unit for displaying an image, for outputting the first audio signal input from the delay processing unit, and second output units 153 and 154 provided above a middle height of the screen of the display unit, for outputting the second audio signal adjusted by the frequency adjustment unit.

## Description

### Technical Field

The present invention relates to an audio output device, a video and audio reproduction device, and an audio output method.

### Background Art

In a video and audio reproduction device such as a television receiver that outputs sound and displays an image, a screen is integrally or separately formed with speakers, in which the speakers are arranged above or below the screen or to a right and left of the screen. There is a related art for matching an image with a sound by adjusting localization of a sound field formed by sounds output from the television receiver.

For example, in Patent Literature 1, a speaker located above or below a video reproduction device reproduces a center channel signal in which a level of a specific band in a frequency band of 4 kHz or more has been suppressed. Further, speakers located to a left and right of the video reproduction device reproduce the center channel signal in the specific band. Further, in Patent Literature 2, an audio signal is divided into a frequency band in which aural direction perception is obtained, and another frequency band. Sound image localization is controlled using a plurality of speakers by adjusting a phase and a sound pressure level of an audio signal in the band in which the direction perception is obtained, and an audio signal in the other band is reproduced using a single speaker without performing the sound image localization on the audio signal.

### Citation List

### Patent Literature

[Patent Literature 1] Japanese Patent Laid-open Publication No. 9-37384
[Patent Literature 2] Japanese Patent Laid-open Publication No. 2-59000

### Summary of Invention

### Technical Problem

In recent years, arrangement positions of speakers integrally provided with a screen in a television receiver are limited due to an effect of a thin shape of the television receiver. As a thickness of a screen portion occupying a dominant portion of the television receiver decreases, for example, in the order of 10 mm to several mm, the speakers tend to be provided below the screen. In particular, for example, speakers capable of outputting sound at 20 Hz to 20 kHz need to have a constant capacity for securing sound quality, and are not provided in the vicinity of the thin screen portion but below the screen. Since it is difficult to secure the capacity of full range speakers when the full range speakers are provided in the vicinity of the thin screen portion, sound in a lower frequency band of, for example, 100 Hz or less may be easily deteriorated.

In a case in which speakers are arranged only below the screen of the television receiver, when speakers are capable of being arranged to a left and right and stereo output, sound image localization can be moved horizontally by adjusting volumes of the left and right speakers. However, in a case in which speakers are arranged only below the screen due to a restriction of a thin shape of the television receiver, it is difficult to move the sound image localization to a middle height of the screen, and the sound image localization is biased below the screen.

The present invention is made in view of the above-mentioned issue, and aims to provide an audio output device, a video and audio reproduction device, and an audio output method which are novel and improved and which are capable of achieving a thin screen and moving sound image localization in a height direction of a screen without degrading sound quality.

### Solution to Problem

According to an aspect of the present invention in order to achieve the above-mentioned object, there is provided an audio output device including: a division unit for dividing an input audio signal into a first audio signal and a second audio signal; a delay processing unit for outputting the first audio signal after delaying the first audio signal from the second audio signal by a predetermined amount; a frequency adjustment unit for adjusting a frequency band of the second audio signal to be a high frequency band of the first audio signal or a frequency band higher than the first audio signal; a first output unit provided above or below a screen of a display unit for displaying an image, for outputting the first audio signal input from the delay processing unit; and a second output unit provided above a middle height of the screen of the display unit, for outputting the second audio signal adjusted by the frequency adjustment unit.

The frequency adjustment unit may adjust the frequency band of the first audio signal and the frequency band of the second audio signal, such that a position in a height direction of localization of a sound image formed by the first audio signal and the second audio signal is moved on the screen of the display unit.

At least one second output unit may be provided at each of left and right of the display unit.

The frequency adjustment unit may adjust the frequency band of the first audio signal so that the first audio signal does not include the frequency band of the second audio signal. Further, the frequency adjustment unit may adjust a high frequency band of the second audio signal. The frequency adjustment unit may adjust the frequency band of the second audio signal to include a frequency of 2 to 4 kHz.

The audio output device may further include a sound pressure adjustment unit for adjusting a sound pressure level of sound resulting from the second audio signal; and a manipulation unit for receiving a manipulation by a user and outputting a manipulation signal to the sound pressure adjustment unit to manipulate the sound pressure level of the second audio signal, wherein when the sound pressure level of the sound resulting from the second audio signal is adjusted to be high, the frequency adjustment unit may decrease the high frequency band of the first audio signal and increase the high frequency band of the second audio signal.

When the sound pressure level of the sound resulting from the second audio signal is adjusted to be low, the frequency adjustment unit may increase the high frequency band of the first audio signal and decrease the high frequency band of the second audio signal.

The sound pressure adjustment unit may adjust a sound pressure level of sound resulting from the first audio signal and the sound pressure level of the sound resulting from the second audio signal, such that a position in a height direction of localization of a sound image formed by the first audio signal and the second audio signal is moved on the screen of the display unit.

According to another aspect of the present invention in order to achieve the above-mentioned object, there is provided a video and audio reproduction device including: a division unit for dividing an input audio signal into a first audio signal and a second audio signal; a delay processing unit for outputting the first audio signal after delaying the first audio signal from the second audio signal by a predetermined amount; a frequency adjustment unit for adjusting a frequency band of the second audio signal to be a high frequency band of the first audio signal or a frequency band higher than the first audio signal; a first output unit provided above or below a screen of a display unit for displaying an image, for outputting the first audio signal input from the delay processing unit; and a second output unit provided above a middle height of the screen of the display unit, for outputting the second audio signal adjusted by the frequency adjustment unit.

According to another aspect of the present invention in order to achieve the above-mentioned object, there is provided an audio output method comprising the steps of: dividing an input audio signal into a first audio signal and a second audio signal; outputting the first audio signal after delaying the first audio signal from the second audio signal by a predetermined amount; adjusting a frequency band of the second audio signal to be a high frequency band of the first audio signal or a frequency band higher than the first audio signal; outputting the first audio signal input from the delay processing unit by a first output unit provided above or below a screen of a display unit for displaying an image; and outputting the second audio signal adjusted by the frequency adjustment unit by a second output unit provided above a middle height of the screen of the display unit.

### Advantageous Effects of Invention

According to the present invention, it is possible to achieve a thin screen and to move the sound image localization in a height direction of the screen without degrading sound quality.

### Brief Description of Drawings

[Fig. 1] Fig. 1 is a front view showing a television receiver according to an embodiment of the present invention.
[Fig. 2] Fig. 2 is a side view showing the television receiver according to the embodiment.
[Fig. 3] Fig. 3 is an enlarged cross-sectional view showing a full range speaker accommodated in a body portion of the television receiver according to the present embodiment.
[Fig. 4] Fig. 4 is a block diagram showing the television receiver according to the embodiment.
[Fig. 5] Fig. 5 is a block diagram showing an audio output unit of the television receiver according to the embodiment.
[Fig. 6] Fig. 6 is a flowchart showing a sound output operation of the television receiver according to the embodiment.
[Fig. 7] Fig. 7 is an illustrative diagram showing a user interface displayed on a screen of a display unit according to the present embodiment.
[Fig. 8] Fig. 8 shows graphs showing frequency characteristics of sounds output from full range speakers and tweeters according to the present embodiment.
[Fig. 9] Fig. 9 is a front view showing the television receiver according to the present embodiment and is an illustrative diagram showing a movement of sound image localization.

### Reference Signs List

- 100: television receiver
- 102: audio output unit
- 104: input unit
- 110: control unit
- 112: manipulation unit
- 120: digital signal processing unit (DSP)
- 121: division unit
- 122, 123: delay processing unit
- 124, 125: frequency adjustment unit
- 126, 127: sound pressure adjustment unit
- 131, 132, 133, 134: D/A conversion unit
- 151, 152, 153, 154: output unit
- 155, 156: full range speaker
- 157, 158: tweeter
- 160: tuner
- 164: demodulation unit
- 166: signal processing unit
- 168: display control unit
- 170: display unit
- 172: display panel
- 174: body portion
- 176: support portion
- 178: support panel

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.
Also, a description will be given in the following order.
1. Configuration of Embodiment
2. Operation of Embodiment

### <1. Configuration of Embodiment>

### [Entire Appearance Configuration]

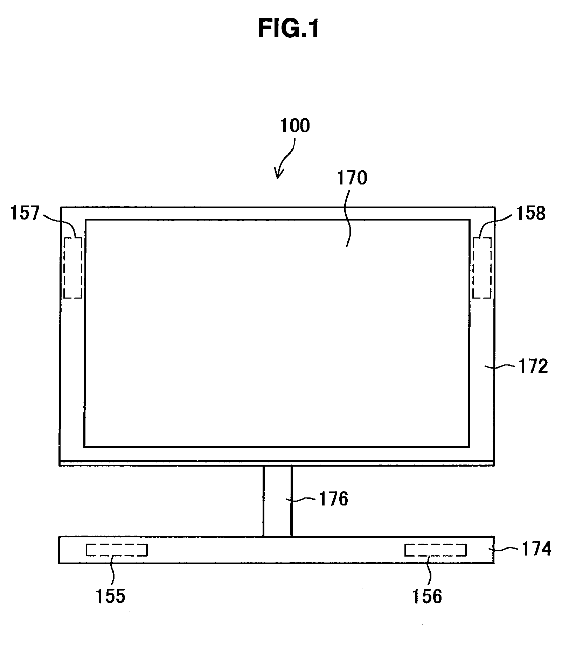

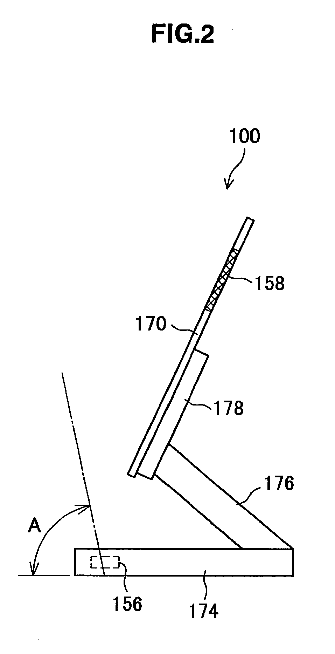

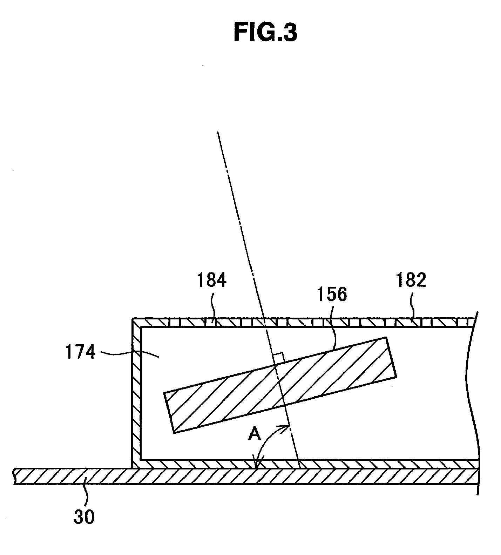

First, a configuration of a television receiver 100 according to an embodiment of the present invention will be described with reference to Figs. 1 to 3. Fig. 1 is a front view showing the television receiver 100 according to the present embodiment. Fig. 2 is a side view showing the television receiver 100 according to the present embodiment. Fig. 2 is view of the television receiver 100 shown in Fig. 1, when viewed from a side. Fig. 3 is an enlarged cross-sectional view showing a full range speaker 156 accommodated in a body portion 174 of the television receiver 100 according to the present embodiment. Fig. 3 is a cross-sectional view of the body portion 174 of the television receiver 100 taken along a cutting plane line extending from a front to a rear, when viewed from a side, according to the present embodiment.

The television receiver 100 is an example of a video and audio reproduction device, and may display an image on a display unit 170 and output sounds from full range speakers 155 and 156 and tweeters 157 and 158 based on a television broadcasting signal, or a video and audio signal input from an external device. Although the television receiver 100 is described in the present embodiment, a video and audio reproduction device to which the present invention may be applied is not limited to the television receiver 100. For example, the video and audio reproduction device may be a display device, a personal computer, or a portable device such as a PDA which does not have a function of receiving a television broadcasting signal, but is capable of reproducing video or audio signals of content recorded in a recording medium, streamed content, and the like.

The television receiver 100 may be divided, for example, into a display panel 172 and a body portion 174, as shown in Figs. 1 and 2. The display panel 172 includes a display unit 170 with a screen, and tweeters 157 and 158, and the body portion 174 includes an audio output unit 102, a tuner 160, full range speakers 155 and 156, and the like, which will be described below. The television receiver 100 further includes a support portion 176 that stands obliquely forward from the body portion 174, and a support panel 178 provided at a top end of the support portion 176 for supporting the display panel 172 from a rear.

The display panel 172 has, for example, a flat shape, and includes a screen of the display unit 170 provided at a center of the display panel, and the tweeters 157 and 158 provided to a left and right of the screen of the display unit 170. The tweeters 157 and 158 are provided above a middle height of the screen. The tweeters 157 and 158 are, for example, capable of stereo output or monaural output. When the stereo output is performed, the tweeter 157 outputs a left sound and the tweeter 158 outputs a right sound. The tweeters 157 and 158 are, for example, flat panel speakers, in which an axial direction of the sound output of the tweeters 157 and 158 is the same as an axial direction of screen display of the display unit 170.

The body portion 174 has, for example, a rectangular parallelepiped shape with an installation surface having a great area. The body portion 174 accommodates, for example, a circuit, which is not shown. The full range speakers 155 and 156 are provided on the left and right. The full range speakers 155 and 156 are capable of, for example, stereo output or monaural output, and when the stereo output is performed, the full range speaker 155 outputs a left sound and the full range speaker 156 outputs a right sound.

An axial direction of sound output of the full range speakers 155 and 156 may be slanted a predetermined angle A with respect to the installation surface, as shown in Figs. 2 and 3. The predetermined angle A is set, for example, in consideration of a direction or a distance of a viewer, positions of the full range speakers 155 and 156 and the tweeters 157 and 158, and the like. For example, when a height of the television receiver 100 is about 250 mm and an interval between the full range speaker 155 (156) and the tweeter 157 (158) is about 200 mm, the axial direction of the sound output of the full range speakers 155 and 156 may be 66° with respect to the installation surface.

As described above, in the television receiver 100 of the present embodiment, the axial direction of the sound output of the full range speakers 155 and 156 provided below the screen is obliquely forward, and the tweeters 157 and 158 are provided above the middle height of the screen. As described above, the sound image localization of the television receiver 100 comes into the vicinity of the screen when the sound output time or the frequency characteristic of the full range speakers 155 and 156 and the tweeters 157 and 158 is adjusted. When sounds are not output from the tweeters 157 and 158, the sound image localization is downward from the screen, but according to the present embodiment, the sound image localization is raised toward an upper portion of the television receiver 100. As a result, the viewer can feel as if the sound is heard from the vicinity of the screen.

### [Entire Configuration according to Functional Blocks]

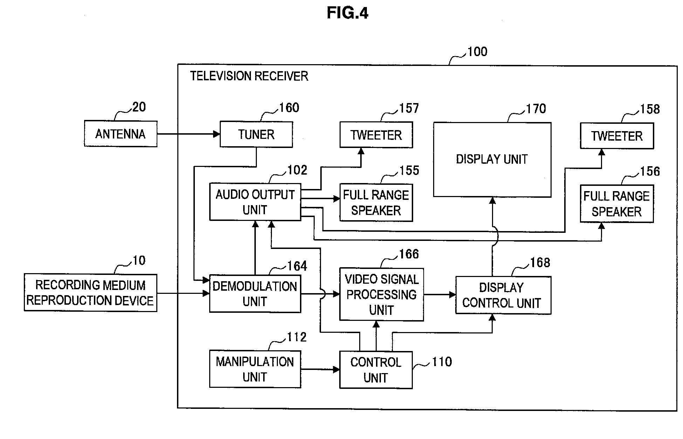

Next, a configuration of the television receiver 100 according to the present embodiment will be described with reference to Fig. 4. Fig. 4 is a block diagram showing the television receiver 100 according to the present embodiment

The television receiver 100 includes, for example, a tuner 160, a demodulation unit 164, an audio output unit 102, full range speakers 155 and 156, tweeters 157 and 158, a video signal processing unit 166, a display control unit 168, a display unit 170, a control unit 110, and a manipulation unit 112.

The television receiver 100 is connected with an antenna 10 to receive a television broadcasting signal. Further, the television receiver 100 is connected with a recording medium reproduction device 20 to receive video and audio reproduction signals of content recorded in a recording medium. The recording medium reproduction device 20 is, for example, an optical disk reproduction device for a DVD, a Blu-ray disc and the like, a hard disk reproduction device, or the like. Although not shown, the television receiver 100 may be connected with a network such as the Internet to receive a video signal of streamed content or downloadable content.

The tuner 160 receives a television broadcasting signal via the antenna 10. The tuner 160 extracts and amplifies a broadcasting signal at a predetermined frequency. The tuner 160 sends a generated signal to the demodulation unit 164.

The demodulation unit 164 receives the broadcasting signal from the tuner 160 or receives a video reproduction signal from the recording medium reproduction device 20. The demodulation unit 164 demodulates the broadcasting signal or a video and audio signal. Further, the demodulation unit 164 divides a multiplexed signal into a video signal and an audio signal by performing a demultiplexing process. Further, the demodulation unit 164 demodulates a signal encoded, for example, by an MPEG standard. The demodulation unit 164 sends a processed signal to the audio output unit 102 and the video signal processing unit 166.

The audio output unit 102 performs predetermined signal processing on the demodulated audio signal, and outputs a processed audio signal to the full range speakers 155 and 156 and the tweeters 157 and 158. The audio output unit 102 will be described in detail.

The full range speakers 155 and 156, for example, output sounds in a frequency band of about 10 Hz to 20 kHz. Further, the frequency band that can be output by the full range speakers 155 and 156 is not limited to this example, but may be in another range. The full range speakers 155 and 156 output sound of a television broadcasting program, content recorded in a recording medium, or the like, based on the audio signal received from the audio output unit 102.

The tweeters 157 and 158 output, for example, sound in a frequency band of 2 kHz or more. Since the tweeters 157 and 158 output the sounds in a high frequency band, the tweeters 157 and 158 have directivity such that a viewer can recognize sound output sources to be in the vicinity of middles of installation places of the tweeters 157 and 158. Further, the tweeters 157 and 158 provide sounds easily heard by a human by outputting the sounds at 2 kHz to 4 kHz. Further, when the frequency band of the tweeters 157 and 158 is 2 kHz or more, harmonics of a human voice as low as about 150 Hz can be output from the tweeters 157 and 158.

The tweeters 157 and 158 are, for example, flat panel speakers. The tweeters 157 and 158 may be speakers according to a scheme using piezoelectric elements. Further, the tweeters 157 and 158 are not limited thereto, but may be speakers according to other schemes. The tweeters 157 and 158 output sounds of the television broadcasting program, the contents recorded in the recording medium, or the like, based on the audio signal received from the audio output unit 102.

The video signal processing unit 166 performs a scaling process according to a pixel number of the display unit 170, a color correction process, an edge emphasizing process, or the like on the video signal received from the demodulation unit 164. The video signal processing unit 166 sends a processed video signal to the display control unit 168.

The display control unit 168 drives the display unit 170 and displays an image on the display unit 170 based on the video signal received from the video signal processing unit 166. The display unit 170 is, for example, a liquid crystal display (LCD), an organic EL display, a plasma display, or the like. An image of the television broadcasting program, the content recorded in the recording medium, or the like is displayed on the display unit 170. Further, the display unit 170 displays a setup menu screen for the television receiver 100, the recording medium reproduction device 20 connected to the television receiver 100 or the like.

The control unit 110 includes, for example, a microcomputer including a central processing unit (CPU), a read only memory (ROM), a random access memory (RAM) and the like. The control unit 110 functions as an arithmetic processing device and a control device by means of a program, and controls the above respective components in the television receiver 100. Further, the control unit 110 controls the respective components of the television receiver 100 based on a signal from the manipulation unit 112.

The manipulation unit 112 receives a manipulation by a user and sends a manipulation signal based on the manipulation to the control unit 110. The manipulation unit 112 includes, for example, buttons or switches provided in a body of the television receiver 100, or a remote controller capable of wirelessly communicating with the control unit 110.

### [Configuration of Audio Output Unit 102]

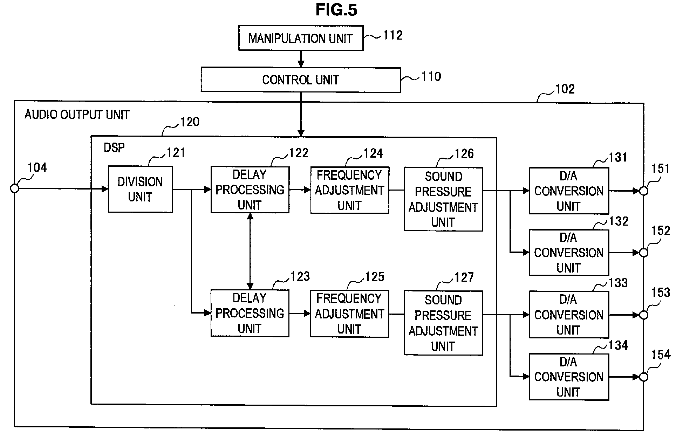

Next, the audio output unit 102 according to the present embodiment will be described in detail with reference to Fig. 5. Fig. 5 is a block diagram showing the audio output unit 102 of the television receiver 100 according to the present embodiment in detail.

The audio output unit 102, for example, includes an input unit 104, a digital signal processing unit (DSP) 120, D/A conversion units 131, 132, 133 and 134, and output units 151, 152, 153 and 154.

The input unit 104 receives the audio signal from the demodulation unit 164 and sends the audio signal to the digital signal processing unit 120.

The digital signal processing unit 120 performs various signal processing on the audio signal received from the demodulation unit 164. The digital signal processing unit 120 sends a processed audio signal to the D/A conversion units 131, 132, 133 and 134. The digital signal processing unit 120 includes, for example, a division unit 121, delay processing units 122 and 123, frequency adjustment units 124 and 125, and sound pressure adjustment units 126 and 127.

The division unit 121 divides the input audio signal into a first audio signal and a second audio signal. Here, the first audio signal is an audio signal ultimately output to the full range speakers 155 and 156, and the second audio signal is an audio signal output to the tweeters 157 and 158. The division unit 121 sends the first audio signal to the delay processing unit 122 and the second audio signal to the delay processing unit 123.

The delay processing unit 122 receives the first audio signal from the division unit 121. The delay processing unit 123 receives the second audio signal from the division unit 121. The delay processing unit 122 delays the first audio signal from the second audio signal by a predetermined amount and outputs the first delayed audio signal to the frequency adjustment unit 124. The delay processing unit 123 outputs the second audio signal to the frequency adjustment unit 125. Further, the delay processing unit 122 and the delay processing unit 123 are synchronized with each other. Further, the delay processing unit 123 may or may not perform a delay process on the second audio signal. That is, the second audio signal may be processed to be output earlier than the first audio signal by the predetermined amount by the delay processing units 122 and 123.

Here, the predetermined amount is an amount corresponding to a predetermined time from output of sounds from the tweeters 157 and 158 resulting from the second audio signal to output of sounds from the full range speakers 155 and 156 resulting from the first audio signal. The predetermined time is, for example, 60 µsec. Accordingly, since sound at a frequency in a high frequency band is first output, a viewer recognizes that the localization of a sound image of the television receiver 100 is in the vicinity of the middle of tweeters 157 and 158, e.g., the vicinity of the screen of the display unit 170.

In a typical speaker system in which the delay process is not performed, the viewer feels as if sound is heard from positions below the television receiver 100 where the full range speakers 155 and 156 are provided. On the other hand, when the delay process is performed as in the present embodiment, the viewer can feel as if sound is heard from the screen, not from the positions below the television receiver 100 where the full range speakers 155 and 156 are provided. Further, the sound is heard with higher resolution and more clearly by performing the delay process in comparison with the case in which the delay process is not performed.

Further, a predetermined time that is a difference between sound output times may be set to a value between 60 µsec and 120 µsec. Here, when the time difference is 100 µsec or more, the viewer feels as if sound clearness is slightly reduced and sound is output like a lump in comparison with a case in which the time difference is less than 100 µsec. However, the viewer can feel as if the sound is output closer to the viewer. Thereby, when content displayed on the screen of the display unit 170 is a 3D image (a stereo image), the content can be more effectively provided to the viewer. Further, since sounds are heard as if the sounds are separately output from an upper side and a lower side and the sounds are heard as being dislocated when the time difference is 180 µsec or more, this time difference is not desirable to achieve the operation of the present embodiment.

Further, while the example in which the delay processing units 122 and 123 are configured of two functional blocks has been described, the delay processing units 122 and 123 may realize the delay process using one functional block.

The frequency adjustment units 124 and 125 receive the manipulation signal generated by a user manipulation in the manipulation unit 112 from the control unit 110 and adjust a frequency band. The frequency adjustment unit 124 receives the first audio signal from the delay processing unit 122 and performs frequency band adjustment on the first audio signal. The frequency adjustment unit 124 sends the first adjusted audio signal to the sound pressure adjustment unit 126. The frequency adjustment unit 125 receives the second audio signal from the delay processing unit 123 and performs frequency band adjustment on the second audio signal. The frequency adjustment unit 125 sends the second adjusted audio signal to the sound pressure adjustment unit 127.

The frequency adjustment unit 125 adjusts a frequency band of the second audio signal so that the second output audio signal is in a high frequency band of the first audio signal or a frequency band higher than the first audio signal. For example, the frequency adjustment unit 124 adjusts the frequency band of the first audio signal so that sounds in a frequency band between about 10 Hz and 20 kHz are output from the full range speakers 155 and 156. Further, the frequency adjustment unit 125 adjusts the frequency band of the second audio signal so that sounds in a frequency band, for example, of 2 kHz or more are output from the tweeters 157 and 158. Accordingly, the viewer can feel as if sound output from the television receiver 100 is heard as stereo sound.

Further, the frequency adjustment unit 124 may adjust the frequency band of the first audio signal so that the first audio signal does not include the frequency band of the second audio signal. For example, in this example, the frequency adjustment unit 124 may adjust the frequency band of the first audio signal so that the first audio signal does not include, for example, the frequency band of 2 kHz or more. Accordingly, the viewer can feel as if the sound output from the television receiver 100 is heard from an upper portion, such as the vicinity of the screen, as sound heard from below the television receiver 100 decreases.

The frequency adjustment unit 125 may adjust the high frequency band of the second output audio signal. That is, the frequency adjustment unit 125 may further widen a range of the higher frequency band when the second audio signal is output in a frequency band of 2 kHz to 10 kHz, as in the case in which a frequency band of 10 kHz or 20 kHz or more is also output. When the sound in the higher frequency band is output in the wider range, the viewer can feel as if sound is not only heard from inside the screen, but also from outside the screen, and thus can feel more stereo and widened sound.

Although in the above description, the frequency adjustment units 124 and 125 adjust the frequency band of the first audio signal and the second audio signal that have been subjected to the delay process, the present invention is not limited to this example. For example, the division unit 121 divides the audio signal into the first audio signal and the second audio signal, and then the frequency adjustment unit may adjust the frequency bands of the first audio signal and the second audio signal. In this case, a delay process is performed on the first audio signal and the second audio signal whose frequencies have been adjusted.

The sound pressure adjustment units 126 and 127 (volume control) receive the manipulation signal generated by the user manipulation in the manipulation unit 112 from the control unit 110, and adjust sound pressures of the audio signals. As the frequency adjustment units 124 and 125 and the sound pressure adjustment units 126 and 127 are simultaneously controlled, the localization of a sound image formed by the first audio signal and the second audio signal is changed in a height direction. The sound pressure adjustment units 126 and 127 adjust the sound pressures of the audio signals received from the frequency adjustment units 124 and 125, respectively. The sound pressure adjustment unit 126 outputs the first audio signal whose sound pressure has been adjusted to the D/A conversion units 131 and 132. The sound pressure adjustment unit 127 outputs the second audio signal whose sound pressure has been adjusted to the D/A conversion units 133 and 134.

The D/A conversion units 131, 132, 133 and 134 perform digital/analog conversion to convert the digital audio signals into analog audio signals. The D/A conversion unit 131 receives the first audio signal for left speaker output and sends the first converted audio signal to the output unit 151. The D/A conversion unit 132 receives the first audio signal for right speaker output and sends the first converted audio signal to the output unit 152. The D/A conversion unit 133 receives the second audio signal for left speaker output and sends the second converted audio signal to the output unit 153. The D/A conversion unit 134 receives the second audio signal for right speaker output, and sends the second converted audio signal to the output unit 154. The first audio signals are output to the full range speakers 155 and 156 via the output units 151 and 152. The second audio signals are output to the tweeters 157 and 158 via the output units 153 and 154. Further, the output units 151 and 152 are examples of first output units, and the output units 153 and 154 are examples of second output units.

### <2. Operation of Embodiment>

### [Sound Output Operation]

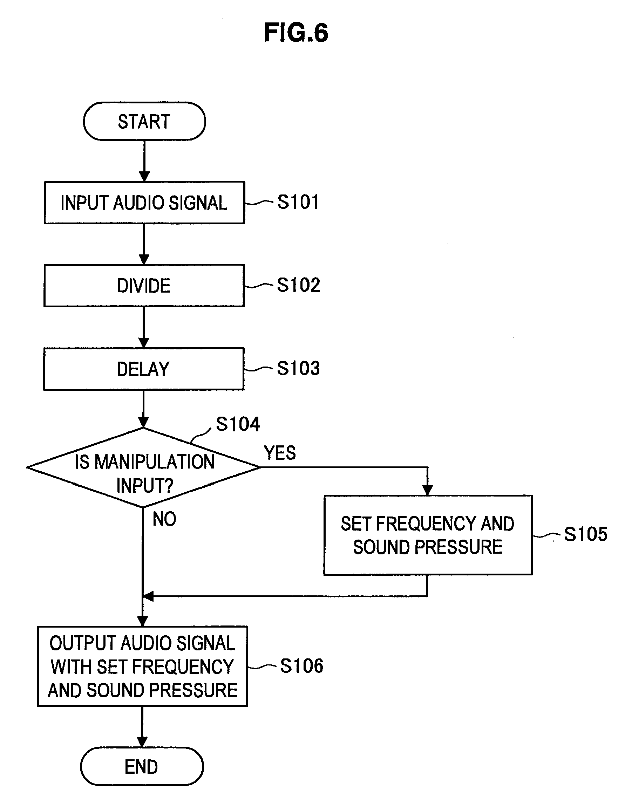

Next, a sound output operation of the television receiver 100 according to an embodiment of the present invention will be described with reference to Fig. 6. Fig. 6 is a flowchart showing a sound output operation of the television receiver 100 according to the present embodiment.

First, a television broadcasting signal or a video and audio signal of content recorded in a recording medium is input, and the audio signal is input to the audio output unit 102 via the tuner 160 and the demodulation unit 164 (step S101).

In the division unit 121 of the audio output unit 102, the audio signal is divided into the first audio signal and the second audio signal (step S102). The first audio signal and the second audio signal are output to the delay processing units 122 and 123, respectively. Next, in the delay processing units 122 and 123, the first audio signal is subjected to a delay process to be delayed and output from the second audio signal by a predetermined amount (step S103). As a result, the second audio signal is output earlier than the first audio signal by the predetermined amount.

Further, a determination is made as to whether sound image localization has been adjusted by a user using a method, which will be described below (step S104). When the sound image localization has been adjusted, the frequency adjustment units 124 and 125 and the sound pressure adjustment units 126 and 127 are set to adjusted frequency band and sound pressure (step S105). When the sound image localization has not been adjusted, preset frequency band and sound pressure or last set frequency band and sound pressure are used.

The audio signal is output with the set frequency and sound pressure from the audio output unit 102 (step S106). As a result, the sounds subjected to the delay process, the frequency adjustment, and the sound pressure (volume) adjustment are output from the full range speakers 155 and 156 and the tweeters 157 and 158. Further, the localization of a sound image formed by the output sounds is as follows.

### [Operation to Adjust Sound Image Localization]

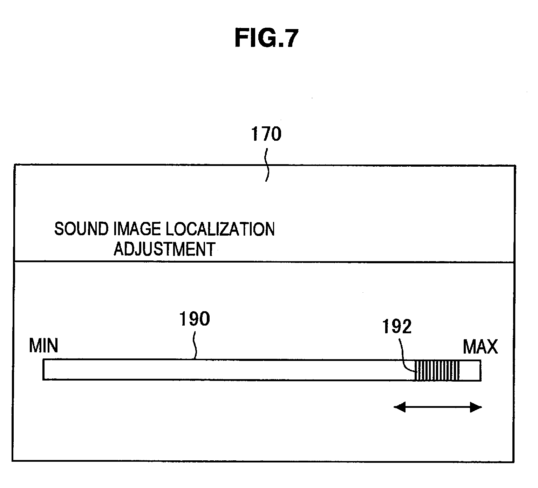

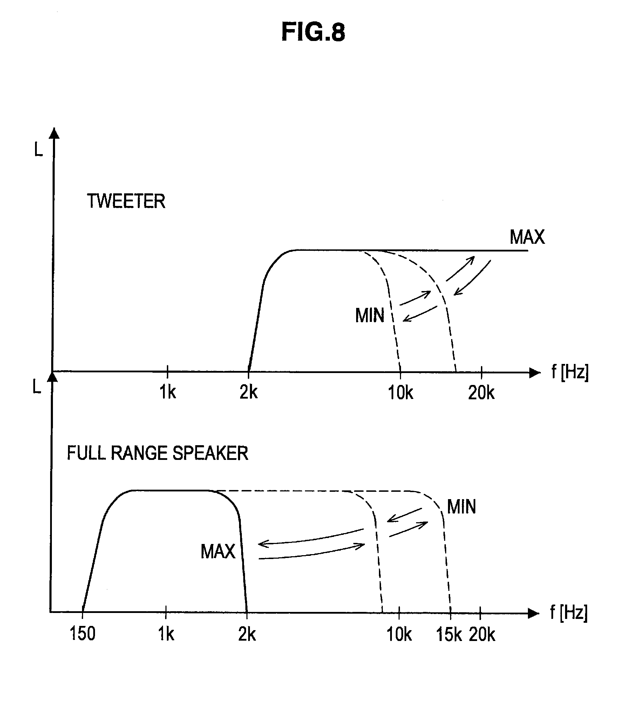

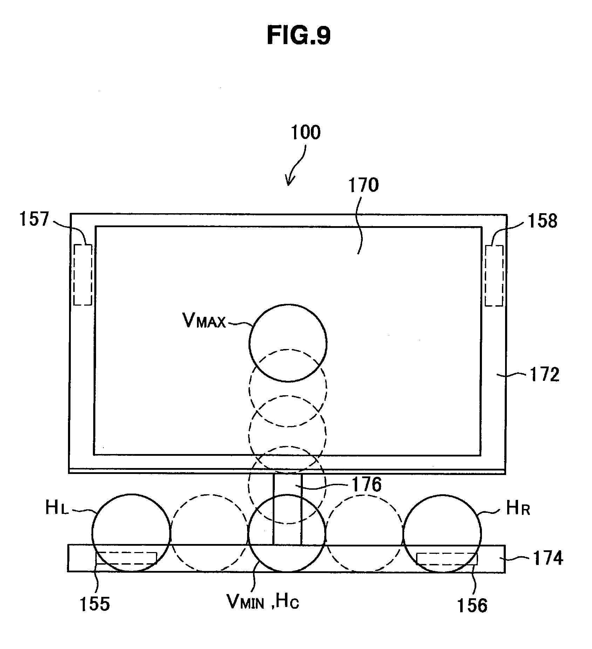

Next, operation to adjust the sound image localization in the television receiver 100 according to an embodiment of the present invention will be described with reference to Figs. 7 to 9. Fig. 7 is an illustrative diagram showing a user interface displayed on the screen of the display unit 170 according to the present embodiment. Fig. 8 shows graphs showing frequency characteristics of the sounds output from full range speakers 155 and 156 and the tweeters 157 and 158 according to the present embodiment. An upper graph in Fig. 8 shows the frequency characteristic of the tweeters 157 and 158, and a lower graph in Fig. 8 shows the frequency characteristic of the full range speakers 155 and 156. Fig. 9 is a front view showing the television receiver 100 according to the present embodiment and is an illustrative diagram showing a movement of the sound image localization.

In the present embodiment, the sound image localization can be moved upward or downward in a height direction of the television receiver 100. The sound image localization may be adjusted by a viewer, for example, through the user interface (UI) as shown in Fig. 7, which is displayed on the screen. Further, the user interface is not limited to the case in which the user interface is displayed on the screen, but may be, for example, a manipulation member such as a substantial slider and tab provided in the television receiver 100 or the remote controller.

As a setup screen for sound image localization adjustment, for example, a slider 190 and a tab 192 moving on the slider 190 are displayed on the screen of the display unit 170. When the tab 192 is located in a leftmost position of the slider 190, the sound image localization adjustment is set to "MIN," and when the tab 192 is located in a rightmost position of the slider 190, the sound image localization adjustment is set to "MAX."

Here, a case in which setup is performed so that the sound image localization is located in a position below the television receiver 100 when the sound image localization adjustment is set to MIN and the sound image localization is located in the vicinity of the screen of the display unit 170 of the television receiver 100 when the sound image localization is set to MAX will be described. Here, the sounds output from the tweeters 157 and 158 are always output a predetermined time (e.g., 60 µsec) earlier than the sound output from the full range speakers 155 and 156.

When the sound image localization adjustment is set to MIN, sound pressure levels of the tweeters 157 and 158 become OFF and sound pressure levels of the full range speakers 155 and 156 are maximized. The frequency bands of the full range speakers 155 and 156 are set, for example, to a range from 150 Hz to 15 kHz, as shown in Fig. 8. As a result, since sounds are not output from the tweeters 157 and 158 at all but only from the full range speakers 155 and 156, the sound image localization is below the television receiver 100, as indicated by V_{MIN} in Fig. 9. In this case, the viewer hears sound from a position below the television receiver 100 in which the full range speakers 155 and 156 are provided. Thereby, since the sound output source does not coincide with an image display direction, the viewer will view broadcasting programs or various contents while remembering an uncomfortable feeling. In particular, such a discrepancy is prominently felt, for example, in a scene in which a person is talking.

In Fig. 8, a change of the frequency characteristic when the sound image localization is adjusted is also shown. Here, in the sound image localization adjustment, the sound pressure level is also changed together. However, for convenience of explanation, Fig. 8 shows a case in which the sound pressure level is constant. That is, since the sound pressure levels of the tweeters 157 and 158 are OFF when the sound image localization adjustment is set to MIN, a graph in which the sound pressure level is flat at 0 is actually obtained.

When the sound image localization adjustment is gradually set from MIN to MAX, the sound pressure levels of the tweeters 157 and 158 gradually increase and, for the frequency band, a range of a high frequency band is gradually widened from a range of 2 kHz to 10 kHz near MIN, as shown in Fig. 8. In the graph of the frequency characteristic of the tweeters 157 and 158 shown in Fig. 8, in fact, the sound pressure gradually increases from level 0 to a maximum value as the setup moves to MAX.

Further, when the sound image localization adjustment is set gradually from MIN to MAX, the sound pressure levels of the full range speakers 155 and 156 gradually decrease and, for the frequency band, a range of a high frequency band is gradually narrowed from a range of 150 Hz to 15 kHz at MIN, as shown in Fig. 8. In the graph of the frequency characteristic of the full range speakers 155 and 156 shown in Fig. 8, in fact, the sound pressure level gradually decreases from a maximum value to a level lower than the maximum value as the setup moves to MAX.

As a result, as the sound pressure levels of the sounds output from the tweeters 157 and 158 increase, the range of a higher frequency band of the sound is widened. The range of a higher frequency band of the sound from the full range speakers 155 and 156 is narrowed. Accordingly, the sound image localization gradually moves from V_{MIN} in Fig. 9 to an upper portion of the television receiver 100. That is, as the sound in the high frequency band is output from the tweeters 157 and 158, the sound output source is felt as if moving to the screen in which the tweeters 157 and 158 are installed due to a directivity characteristic of sound. As the sound pressure level is changed, the rise of the sound image localization is clearer.

When the sound image localization adjustment is set to MAX, the sound pressure level of the tweeters 157 and 158 is maximized and the sound pressure level of the full range speakers 155 and 156 decreases from the maximum. The frequency band of the full range speakers 155 and 156 is set, for example, to a range of 150 Hz to 2 kHz, as shown in Fig. 8. Further, the frequency band of the tweeters 157 and 158 is set to 2 kHz as a lower limit and, for example, 20 kHz or more as an upper limit.

Accordingly, the frequency band of the sound output from the tweeters 157 and 158 does not overlap the frequency band of the sound output from the full range speakers 155 and 156. As a result, sound felt as if being output from below the television receiver 100 is not heard and sound is heard as if being output from the vicinity of the screen of the television receiver 100. Further, sound is felt as if being heard from above the installation surface, and the sound is felt as if being floated and output from the installation surface.

Further, when the range of the higher frequency band of the sound output from the tweeters 157 and 158 is widened, sound is felt as if being heard not only from inside the screen, but also from outside the screen. As a result, the viewer can hear more stereo sound.

The sound image localization is near the center of the screen of the television receiver 100 as indicated by V _{MAX} in Fig. 9. In this case, the viewer hears sound from the vicinity of the screen of the television receiver 100 in which the full range speakers 155 and 156 are provided. Thereby, since the sound output source coincides with the image display direction, the viewer can view broadcasting programs or various contents without remembering an uncomfortable feeling. In particular, more realistic watching is feasible, for example, in a scene in which a person is talking.

For convenience of explanation, Fig. 8 shows a case in which the sound pressure level is constant. However, when the sound image localization adjustment is set to MAX, the sound pressure levels of the tweeters 157 and 158 increase from OFF to the maximum value.

When the sound image localization adjustment is gradually set from MAX to MIN, the sound pressure levels of the tweeters 157 and 158 gradually decrease and, for the frequency band, the range of the higher frequency band is gradually narrowed from the range of 150 Hz to 2 kHz at MAX, as shown in Fig. 8. In the graph of the frequency characteristic of the tweeters 157 and 158 shown in Fig. 8, in fact, the sound pressure gradually decreases from the maximum value to level 0 as the setup moves to MIN.

In addition, when the sound image localization adjustment is set gradually from MAX to MIN, the sound pressure levels of the full range speakers 155 and 156 gradually increase and, for the frequency band, the range of a higher frequency band is gradually widened from the range of 150 Hz to 2 kHz at MAX, as shown in Fig. 8. In the graph of the frequency characteristic of the full range speakers 155 and 156 shown in Fig. 8, in fact, the sound pressure level gradually increases from a level lower than the maximum value to the maximum value as the setup moves to MIN.

As described above, the change of the difference between output times of the sounds of the speakers of the full range speakers 155 and 156 and the tweeters 157 and 158, the frequency characteristic, and the sound pressure level (volume) interworks the user interface, making vertical adjustment of the sound image localization possible. When the sound image localization adjustment is set to MAX, the sound image localization as described above is in the vicinity of the center of the screen. Meanwhile, when the sound image localization adjustment is set to MIN, the sound image localization is below the television receiver 100. Further, since there is no output of the tweeters 157 and 158 by setting the sound image localization adjustment to MIN, harsh sound can be excluded for persons who are sensitive to sounds in the high frequency band.

While the case in which the sounds output from the tweeters 157 and 158 are always output a predetermined time earlier than the sound output from the full range speakers 155 and 156 has been described, the present invention is not limited to this example. For example, the difference between the sound output times may be adjusted in a range of 60 µsec to 120 µsec.

As described above, according to the present embodiment, the tweeters 157 and 158 are provided above the middle height of the screen of the display unit 170 and the full range speakers 155 and 156 are provided below the screen. It is possible to move the sound image localization upward and downward from the television receiver by changing the difference between the output times of the sounds of the speakers of the full range speakers 155 and 156 and the tweeters 157 and 158, the frequency characteristic, and the sound pressure level (volume).

In the television receiver 100 of the present embodiment, the sound resulting from the second audio signal at a frequency in a high frequency band is output from the tweeters 157 and 158. The sounds output from the tweeters 157 and 158 are output a predetermined time earlier than the sounds resulting from the first audio signal output from the full range speakers 155 and 156. Thereby, the viewer can feel as if sound is heard from the vicinity of the middle in which the tweeters 157 and 158 are installed, i.e., from the vicinity of the screen, and it is possible to realize a sound field with presence in comparison with a related art since the sound output source coincides with the image display direction. Further, more spatially widened sound can be heard by widening the range of the frequency characteristic of a higher frequency band of the sounds output from the tweeters 157 and 158.

In a related art, the sound image localization can be moved in a horizontal direction as indicated by H_{L}, H_{C} and H_{R} in Fig. 9 by changing the sound pressure levels of the left and right speakers, but it is difficult to move the sound image localization in a vertical direction. Thereby, the sound image tends to be biased downward or upward from the television receiver 100. In recent years, arrangement positions of speakers integrally provided with the screen in the television receiver are limited due to an effect of a thin shape of the television receiver. As the thickness of a screen portion occupying a dominant portion of the television receiver is reduced on the order of, for example, 10 mm to several mm, the speakers are provided below the screen.

According to the present embodiment, it is possible to move the sound image localization to the vicinity of the screen even when the full range speakers 155 and 156 are provided above or below the screen of the television receiver 100. That is, even when the tweeters 157 and 158 are provided near the screen, it is possible to achieve a thin screen since capacities of the tweeters 157 and 158 need not be secured, and to move the sound image localization in the height direction of the screen without degrading the sound quality. Further, the full range speakers 155 and 156 requiring constant capacities need not be arranged in the vicinity of the screen and can be arranged above or below the screen, thereby securing the sound quality while achieving the thin screen.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

For example, the video and audio reproduction device of the present invention is not limited to the form of the television receiver 100 in which the display panel 172 and the body portion 174 are separate as shown in Fig. 1 or 2. The video and audio reproduction device of the present invention may have, for example, a form of one package in which the display panel 172 is integrally provided with the body portion 174. Further, in this form, the full range speakers need to be provided below or above the screen of the display unit and the tweeters need to be provided above a middle height of the screen of the display unit.

While in the above embodiment, the case in which the full range speakers 155 and 156 are provided at the left and at the right, respectively, and the tweeters 157 and 158 are provided at the left and the right, respectively, has been described, the present invention is not limited to this example. For example, one full range speaker or three or more full range speakers may be provided below the screen of the display unit, and one tweeter or three or more tweeters may be provided above the middle height of the screen of the display unit.

While, in the above embodiment, the case in which the full range speakers 155 and 156 are provided below the screen of the display unit for displaying an image has been described, the present invention is not limited to this example. For example, the full range speakers may be provided above the screen of the display unit. In this case, it is possible to move the sound image localization to the vicinity of the screen by adjusting the sound pressure levels, the frequency characteristics, and the differences of the sound output times of the full range speakers and the tweeters.

Further, while in the above embodiment, the case in which the full range speakers 155 and 156 are spaced by a distance of about 20 cm from the tweeters 157 and 158 has been described, the present invention is not limited to this example. The distance between the full range speakers and the tweeters may have other values. In this case, the difference between the sound output time of the full range speakers and the sound output time of the tweeters in order for the sound image localization to be in the vicinity of the screen is not limited to the above-described example, but may have other values.

## Claims

1. An audio output device comprising:
a division unit for dividing an input audio signal into a first audio signal and a second audio signal;
a delay processing unit for outputting the first audio signal after delaying the first audio signal from the second audio signal by a predetermined amount;
a frequency adjustment unit for adjusting a frequency band of the second audio signal to be a high frequency band of the first audio signal or a frequency band higher than the first audio signal;
a first output unit provided above or below a screen of a display unit for displaying an image, for outputting the first audio signal input from the delay processing unit; and
a second output unit provided above a middle height of the screen of the display unit, for outputting the second audio signal adjusted by the frequency adjustment unit.

2. The audio output device according to claim 1, wherein the frequency adjustment unit adjusts the frequency band of the first audio signal and the frequency band of the second audio signal, such that a position in a height direction of localization of a sound image formed by the first audio signal and the second audio signal is moved on the screen of the display unit.

3. The audio output device according to claim 1, wherein at least one second output unit is provided to each of a left and right of the display unit.

4. The audio output device according to claim 1, wherein the frequency adjustment unit adjusts the frequency band of the first audio signal so that the first audio signal does not include the frequency band of the second audio signal.

5. The audio output device according to claim 1, wherein the frequency adjustment unit is capable of adjusting a high frequency band of the second audio signal.

6. The audio output device according to claim 1, wherein the frequency adjustment unit adjusts the frequency band of the second audio signal to include a frequency of 2 to 4 kHz.

7. The audio output device according to claim 1, further comprising a sound pressure adjustment unit for adjusting a sound pressure level of sound resulting from the second audio signal; and
a manipulation unit for receiving a manipulation by a user and outputting a manipulation signal to the sound pressure adjustment unit to manipulate the sound pressure level of the second audio signal,
wherein, when the sound pressure level of the sound resulting from the second audio signal is adjusted to be high, the frequency adjustment unit decreases the high frequency band of the first audio signal and increases the high frequency band of the second audio signal.

8. The audio output device according to claim 7, wherein, when the sound pressure level of the sound resulting from the second audio signal is adjusted to be low, the frequency adjustment unit increases the high frequency band of the first audio signal and decreases the high frequency band of the second audio signal.

9. The audio output device according to claim 7, wherein the sound pressure adjustment unit adjusts a sound pressure level of sound resulting from the first audio signal and the sound pressure level of the sound resulting from the second audio signal, such that a position in a height direction of localization of a sound image formed by the first audio signal and the second audio signal is moved on the screen of the display unit.

10. A video and audio reproduction device comprising:
a division unit for dividing an input audio signal into a first audio signal and a second audio signal;
a delay processing unit for outputting the first audio signal after delaying the first audio signal from the second audio signal by a predetermined amount;
a frequency adjustment unit for adjusting a frequency band of the second audio signal to be a high frequency band of the first audio signal or a frequency band higher than the first audio signal;
a first output unit provided above or below a screen of a display unit for displaying an image, for outputting the first audio signal input from the delay processing unit; and
a second output unit provided above a middle height of the screen of the display unit, for outputting the second audio signal adjusted by the frequency adjustment unit.

11. An audio output method comprising the steps of:
dividing an input audio signal into a first audio signal and a second audio signal;
outputting the first audio signal after delaying the first audio signal from the second audio signal by a predetermined amount;
adjusting a frequency band of the second audio signal to be a high frequency band of the first audio signal or a frequency band higher than the first audio signal;
outputting the first audio signal input from the delay processing unit by a first output unit provided above or below a screen of a display unit for displaying an image; and
outputting the second audio signal adjusted by the frequency adjustment unit by a second output unit provided above a middle height of the screen of the display unit.
